# EUROPEAN PATENT APPLICATION

(11) **EP 4 847 195 A2**
(43) Date of publication of application: **02.12.2026**
(21) Application number: 26181624.3
(22) Date of filing: 28.05.2026
(51) Int. Cl.: B23Q 7/14, B23Q 1/48, B23Q 16/10

(54) **PALLET CONVEYANCE DEVICE**

(30) Priority: 29.05.2025 JP 2025089817
(71) Applicant: DMG Mori Co., Ltd., Nara-shi, Nara 630-8122 (JP)
(72) Inventor: MIYAMOTO, Daisuke, Nara City, Nara, 630-8122 (JP)
(74) Representative: Isarpatent

(57) **Abstract**

A pallet conveyance device includes: a base (211) including a first locking portion (201); a swivel body (212) including a second locking portion (202); and a fork (213) including a support portion (317), the fork (213) sliding such that the support portion moves between a first position (Pa) and a second position (Pb) offset from directly above the swivel body (212) and moving upward and downward such that the support portion moves between a third position (Pc) and a fourth position (Pd) located above the third position (Pc). When the support portion (317) is positioned at the second position (Pb) and the fourth position (Pd), the second locking portion (202) is lockable to the first locking portion (201) in an up-down direction at a position opposite the support portion (317) with a swivel center axis (110) of the swivel body in between.

## Description

### BACKGROUND OF THE INVENTION

### Field of the Invention

The present invention relates to a pallet conveyance device.

### Description of the Background Art

For example, Japanese Patent Laying-Open No. 2020-110875 discloses a pallet conveyance system including a conveyance device for conveying a pallet, a pallet housing unit for housing the pallet, a workstation in which a worker is to conduct work of attaching a workpiece to the pallet conveyed from the pallet housing unit, and a machine tool for machining the workpiece attached to the pallet at the workstation.

### SUMMARY OF THE INVENTION

As disclosed in Japanese Patent Laying-Open No. 2020-110875 described above, a pallet conveyance device is used to automatically move pallets between various pieces of equipment, such as a machine tool, a pallet stocker, and a setup station. In such a pallet conveyance device, it is necessary to stabilize the orientation of the supported pallet in order to smoothly transfer the pallet to the various pieces of equipment. Furthermore, it is necessary to increase the flexibility in layout of the various pieces of equipment, such as a machine tool, a pallet stocker, and a setup station, to which pallets are conveyed by the pallet conveyance device.

An object of the present invention is to provide a pallet conveyance device capable of stabilizing the orientation of a pallet during transfer of the pallet to various pieces of equipment.

Another object of the present invention is to provide a pallet conveyance device capable of increasing the flexibility in layout of various pieces of equipment to which pallets are conveyed.

A pallet conveyance device according to an aspect of the present invention includes: a base including a first locking portion; a swivel body including a second locking portion facing the first locking portion from below, the swivel body being mounted on the base and swiveling about a swivel center axis parallel to an up-down direction; and a fork including a support portion that is configured to support a pallet, the fork being mounted on the swivel body, the fork sliding such that the support portion moves between a first position directly above the swivel body and a second position offset from directly above the swivel body and moving upward and downward such that the support portion moves between a third position and a fourth position located above the third position. When the support portion is positioned at the second position and the fourth position, the second locking portion is lockable to the first locking portion in the up-down direction at a position opposite the support portion with the swivel center axis in between in a sliding direction of the fork.

A pallet conveyance device according to another aspect of the present invention includes: a swivel body; a swivel mechanism including a servomotor and transmitting rotation output from the servomotor to the swivel body to cause the swivel body to swivel about a swivel center axis parallel to an up-down direction; and a fork including a support portion that is configured to support a pallet, the fork being mounted on the swivel body and sliding such that the support portion moves between a first position directly above the swivel body and a second position offset from directly above the swivel body.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a top view of a pallet handling system in which a pallet conveyance device of Embodiment 1 of the present invention is used.
Fig. 2 is a side view of the pallet handling system of Fig. 1.
Fig. 3 is another side view of the pallet handling system of Fig. 1.
Fig. 4 is a perspective view of the pallet conveyance device of Fig. 1.
Fig. 5 is another perspective view of the pallet conveyance device of Fig. 1.
Fig. 6 is an exploded view of the pallet conveyance device of Fig. 5.
Fig. 7 is a diagram schematically showing the movement of a support portion during sliding and moving upward and downward of a fork.
Fig. 8 is a cross-sectional view of the pallet conveyance device taken along a line VIII-VIII in Fig. 4.
Fig. 9 is a cross-sectional view of the pallet conveyance device taken along a line IX-IX in Fig. 5.
Fig. 10 is a perspective view of a swivel mechanism for causing a swivel body to swivel.
Fig. 11 is a top view of the swivel mechanism for causing the swivel body to swivel.
Fig. 12 is a cross-sectional view of the pallet conveyance device within the area enclosed by a chain double-dashed line XII in Fig. 8.
Fig. 13 is a cross-sectional view of the pallet conveyance device within the area enclosed by a chain double-dashed line XIII in Fig. 9.
Fig. 14 is a perspective view of the pallet conveyance device as viewed in the direction indicated by an arrow XIV in Fig. 6.
Fig. 15 is a top view schematically showing the layout of various pieces of equipment in the pallet handling system.
Fig. 16 is a top view schematically showing another embodiment of the layout of various pieces of equipment in the pallet handling system.
Fig. 17 is a top view schematically showing still another embodiment of the layout of various pieces of equipment in the pallet handling system.
Fig. 18 is a top view of a pallet handling system in Embodiment 3 of the present invention.
Fig. 19 is a side view of the pallet handling system of Fig. 18.
Fig. 20 is another side view of the pallet handling system of Fig. 18.
Fig. 21 is a top view schematically showing the layout of various pieces of equipment in the pallet handling system of Fig. 18.
Fig. 22 is a top view schematically showing another embodiment of the layout of various pieces of equipment in the pallet handling system.

### DESCRIPTION OF THE PREFERRED EMBODIMENTS

Embodiments of the present invention will be described with reference to the drawings. In the drawings referred to below, the same or corresponding elements have the same reference characters allotted.

### (Embodiment 1)

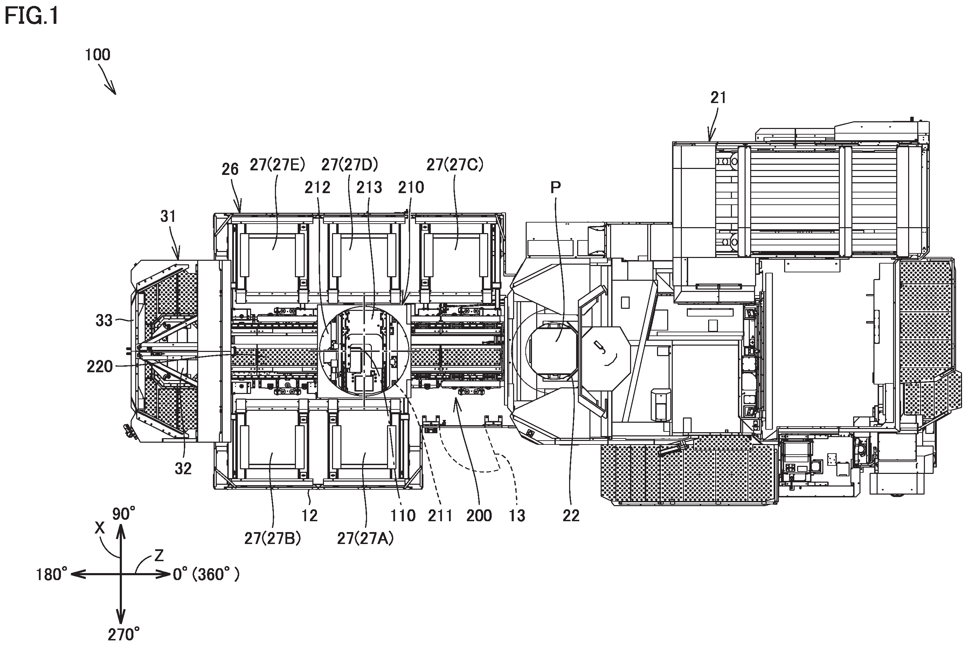

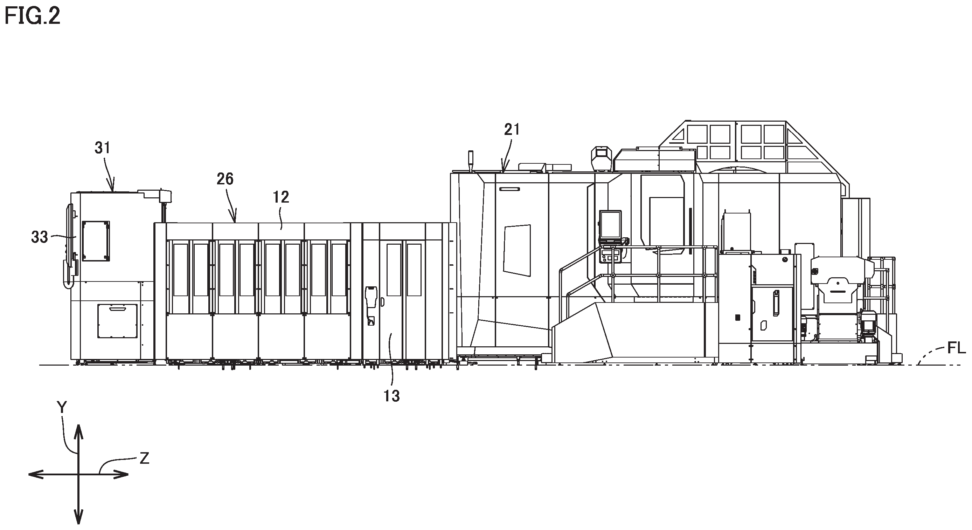

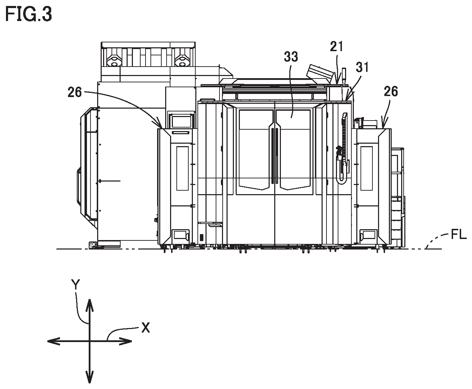

Fig. 1 is a top view of a pallet handling system in which a pallet conveyance device of Embodiment 1 of the present invention is used. Figs. 2 and 3 are side views of the pallet handling system of Fig. 1.

In Figs. 1 to 3 and the figures, which will be described later, an X-axis extending in a horizontal direction, a Z-axis extending in the horizontal direction and perpendicular to the X-axis, and a Y-axis extending in an up-down direction are shown for the convenience of describing configurations of a pallet handling system 100 and a pallet conveyance device 200.

Referring to Figs. 1 to 3, pallet handling system 100 includes a machine tool 21, a pallet stocker 26, a setup station 31, and pallet conveyance device 200. Pallet conveyance device 200 conveys a pallet P between machine tool 21, pallet stocker 26, and setup station 31.

Pallet conveyance device 200 includes a conveyance body 210 and a support base 220. Conveyance body 210 conveys pallet P. Support base 220 is installed on a floor surface FL of a factory or the like.

Support base 220 extends in one direction parallel to the horizontal direction. Support base 220 extends in the axial direction of the Z-axis (hereinafter also referred to as the "Z-axis direction"). Support base 220 supports conveyance body 210.

Conveyance body 210 includes a base 211, a swivel body 212, and a fork 213. Base 211 is disposed on support base 220. Base 211 is movable in the Z-axis direction. Support base 220 supports base 211 (conveyance body 210) that moves in the Z-axis direction. Swivel body 212 is mounted on base 211. Swivel body 212 is capable of swiveling about a swivel center axis 110. Swivel center axis 110 extends in the Y-axis direction (corresponding to the up-down direction, hereinafter also referred to as a "Y-axis direction"). Fork 213 is mounted on swivel body 212. Fork 213 is capable of sliding in the horizontal direction. Fork 213, together with swivel body 212, is capable of moving upward and downward in the Y-axis direction (up-down direction).

When pallet handling system 100 is viewed from above, machine tool 21, pallet stocker 26, and setup station 31 are provided along support base 220.

Machine tool 21 is equipment for machining workpieces. Machine tool 21 is a numerically controlled (NC) machine tool in which various operations for workpiece machining are automated by computer-based numerical control. Machine tool 21 is a machining center that performs workpiece machining (milling) by bringing a rotating tool into contact with the workpiece.

Machine tool 21 includes a pallet placement stand 22. Pallet placement stand 22 is installed outside the machining area (the region where a workpiece is machined). Pallet P, to which a workpiece before or after machining is attached, is placed on pallet placement stand 22. When pallet handling system 100 is viewed from above, pallet placement stand 22 faces support base 220 in the Z-axis direction. Pallet placement stand 22 may include a clamping mechanism for holding pallet P. The same is true for a pallet placement stand included in equipment other than the machine tool.

As a representative example, machine tool 21 is a horizontal machining center in which the rotation center axis of the tool extends in the horizontal direction. Machine tool 21 includes a tool spindle that is disposed within the machining area and is capable of holding a tool and rotating the held tool, a table that is disposed within the machining area and is capable of detachably holding pallet P and causing pallet P to swivel about a swivel center axis extending in the up-down direction, an automatic tool changer (ATC) for changing the tool held by the tool spindle, a tool magazine for storing a plurality of tools, and an automatic pallet changer (APC) for changing pallet P between the table and pallet placement stand 22.

Setup station 31 is equipment primarily for attaching and detaching workpieces to and from pallet P. Setup station 31 includes a pallet placement stand 32 and a door 33. Pallet P is placed on pallet placement stand 32. Door 33 is provided in a cover surrounding pallet placement stand 32. Door 33 is opened and closed when an operator attaches and detaches a workpiece to and from pallet P.

When pallet handling system 100 is viewed from above, pallet placement stand 32 faces support base 220 in the Z-axis direction. Machine tool 21 and setup station 31 are disposed to face each other in the Z-axis direction with pallet conveyance device 200 (support base 220) in between.

Pallet stocker 26 is equipment for storing pallets P. Pallet stocker 26 includes a pallet placement stand 27. Pallet P is placed on pallet placement stand 27. When pallet handling system 100 is viewed from above, pallet placement stand 27 faces support base 220 in the axial direction of the X-axis (hereinafter also referred to as an "X-axis direction").

Pallet stocker 26 includes a plurality of pallet placement stands 27 (27A, 27B, 27C, 27D, 27E). Pallet placement stands 27A and 27B are arranged in the Z-axis direction along support base 220. Pallet placement stands 27C, 27D, and 27E are arranged in the Z-axis direction along support base 220. Pallet placement stands 27A and 27D face each other in the X-axis direction with support base 220 in between. Pallet placement stands 27B and 27E face each other in the X-axis direction with support base 220 in between.

The space in which pallet P is conveyed is enclosed by a fence 12. Fence 12 is provided with an openable door 13. Door 13 faces pallet placement stand 27C in the X-axis direction with support base 220 in between. An operator can enter the space inside fence 12 by opening door 13 during, for example, maintenance of pallet handling system 100.

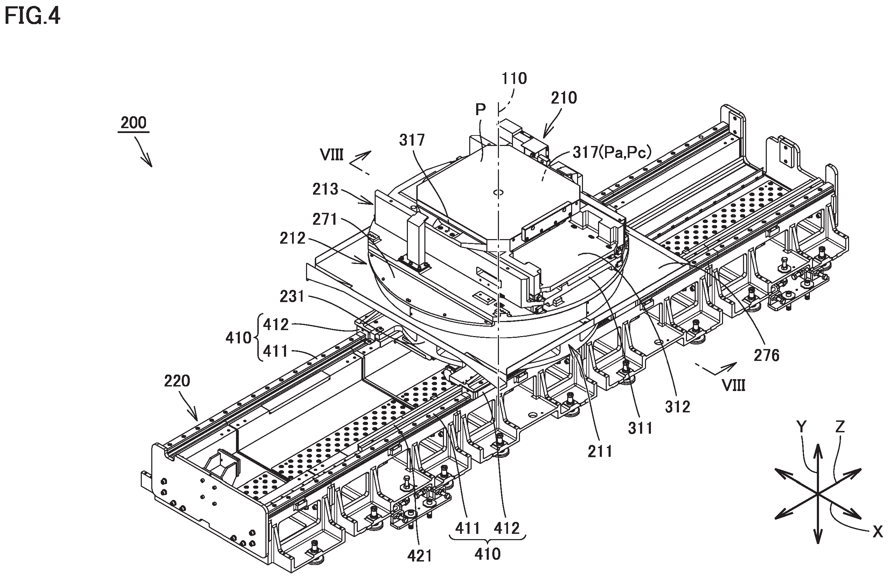

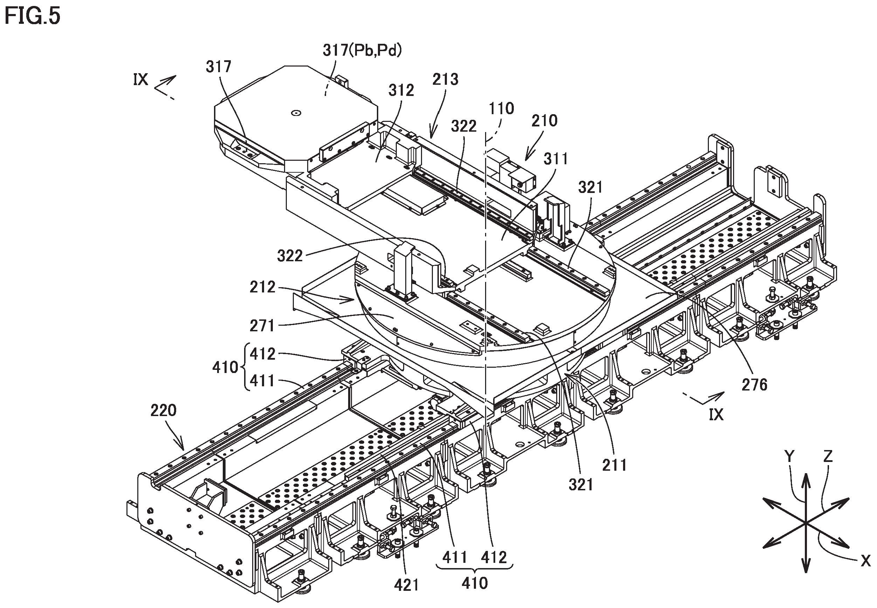

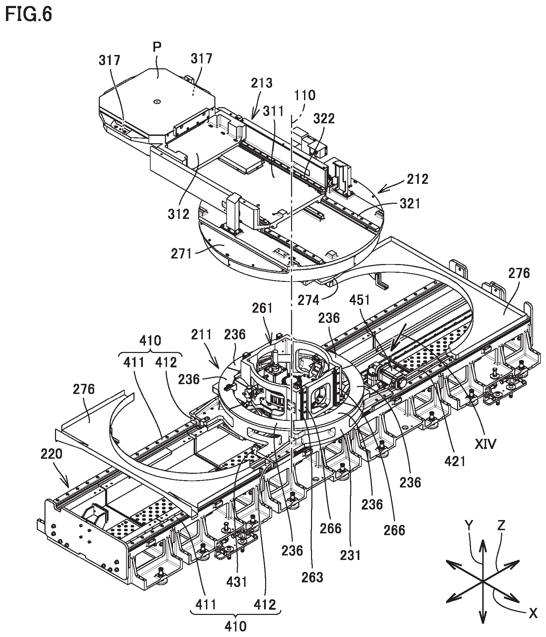

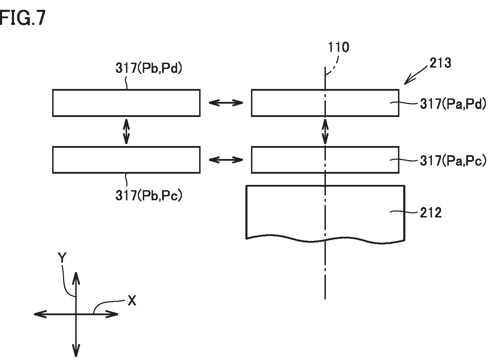

Next, a configuration of pallet conveyance device 200 will be described in more detail. Figs. 4 and 5 are perspective views of the pallet conveyance device of Fig. 1. Fig. 6 is an exploded view of the pallet conveyance device of Fig. 5. Fig. 7 is a diagram schematically showing the movement of a support portion during sliding and moving upward and downward of the fork.

Figs. 4 and 5 show pallet conveyance device 200 in conveyance of pallet P to pallet placement stand 27D of pallet stocker 26 of Fig. 1.

Referring to Figs. 4 to 7, fork 213 includes a support portion 317. Support portion 317 is capable of supporting pallet P. Fork 213 slides such that support portion 317 moves between a first position Pa directly above swivel body 212 (base 211) and a second position Pb offset from directly above swivel body 212 (base 211). Fork 213 moves upward and downward such that support portion 317 moves between a third position Pc and a fourth position Pd, which is located above third position Pc. In Fig. 4, support portion 317 is positioned at first position Pa and third position Pc. In Fig. 5, support portion 317 is positioned at second position Pb and fourth position Pd.

For example, assuming that pallet P is to be conveyed pallet placement stand 27D of pallet stocker 26, conveyance body 210 first moves in the Z-axis direction and swivel body 212 rotates about swivel center axis 110 such that fork 213 faces pallet placement stand 27D in the X-axis direction.

Subsequently, fork 213 slides such that support portion 317 moves from first position Pa toward second position Pb while being positioned at fourth position Pd. As a result, fork 213 enters pallet stocker 26, and pallet P supported by support portion 317 is disposed directly above pallet placement stand 27D. Fork 213 then moves downward such that support portion 317 moves from fourth position Pd toward third position Pc. As a result, pallet P supported by support portion 317 is placed on pallet placement stand 27D. Fork 213 then slides such that support portion 317 moves from second position Pb toward first position Pa. As a result, fork 213 exits pallet stocker 26.

Note that when pallet P is to be conveyed from pallet placement stand 27D, the above operation of fork 213 may be performed in reverse. The side on which fork 213 advances or retreats relative to swivel body 212 is only one side, and for example, when pallet P is to be moved from setup station 31 to machine tool 21, swivel body 212 has to be caused to swivel by 180°.

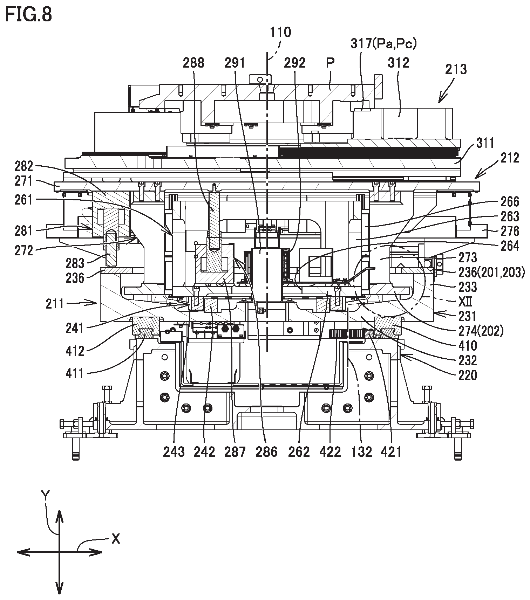

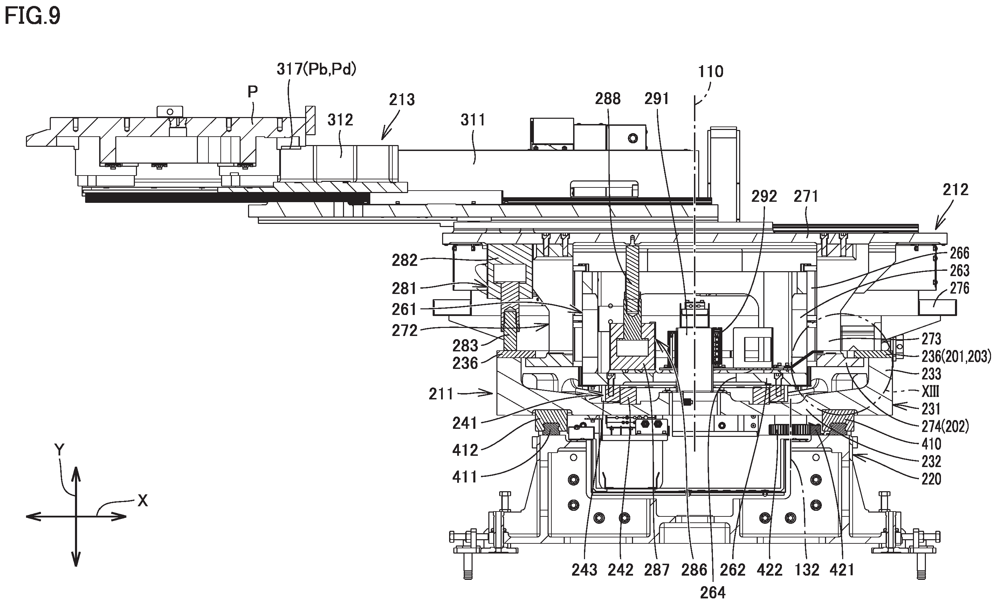

Fig. 8 is a cross-sectional view of the pallet conveyance device taken along a line VIII-VIII in Fig. 4. Fig. 9 is a cross-sectional view of the pallet conveyance device taken along a line IX-IX in Fig. 5.

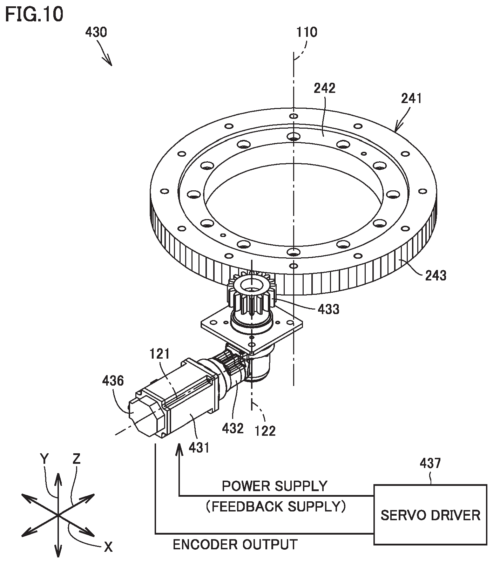

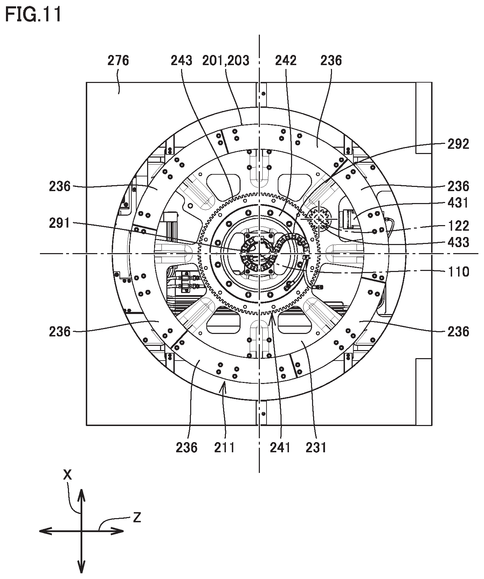

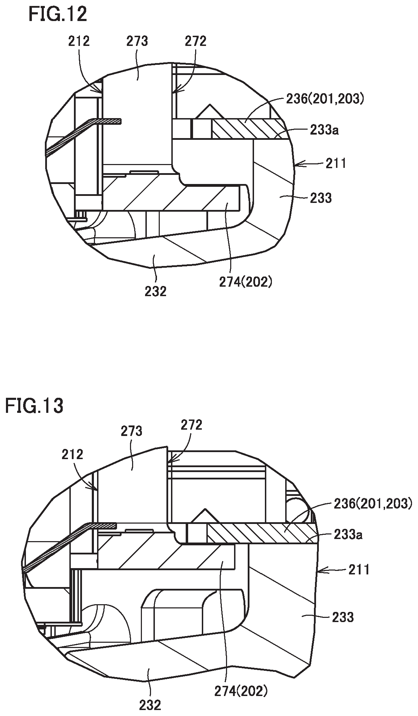

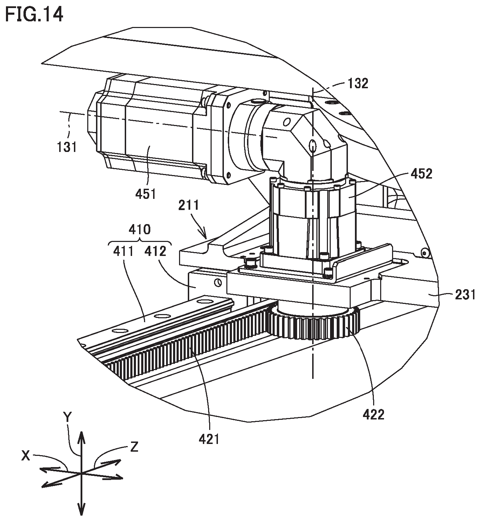

Fig. 10 is a perspective view of a swivel mechanism for causing a swivel body to swivel. Fig. 11 is a top view of the swivel mechanism for causing the swivel body to swivel. Fig. 12 is a cross-sectional view of the pallet conveyance device within the area enclosed by a double-dashed line XII in Fig. 8. Fig. 13 is a cross-sectional view of the pallet conveyance device within the area enclosed by a chain double-dashed line XIII in Fig. 9. Fig. 14 is a perspective view of the pallet conveyance device as viewed in the direction indicated by an arrow XIV in Fig. 6.

Referring to Figs. 4 to 14, when pallet conveyance device 200 is viewed from above, support base 220 has a rectangular shape in which the Z-axis direction corresponds to the longitudinal direction and the X-axis direction corresponds to the transverse direction. Support base 220 is fixed to floor surface FL by fixing means such as an anchor bolt.

Base 211 is disposed directly above support base 220. The length of base 211 in the Z-axis direction is shorter than the length of support base 220 in the Z-axis direction.

Base 211 includes a base body 231 and a plurality of split plates 236. Base body 231 constitutes the main portion of base 211. Base body 231 supports swivel body 212 and fork 213. Base body 231 bears the weights of swivel body 212 and fork 213.

Base body 231 includes a bottom portion 232 and a rising portion 233. Bottom portion 232 has a plate shape in which the Y-axis direction corresponds to the thickness direction and which extends parallel to the horizontal plane (X-axis-Z-axis plane). Rising portion 233 rises from the peripheral edge of bottom portion 232. Rising portion 233 extends in the circumferential direction about swivel center axis 110.

Split plate 236 is formed of a plate material extending in an arc. The plurality of split plates 236 are arranged in a circumferential direction about swivel center axis 110 to form a ring shape. The plurality of split plates 236 are attached to base body 231. The plurality of split plates 236 are attached to a top surface 233a of rising portion 233 (see Figs. 12 and 13). The plurality of split plates 236 are provided so as to protrude from rising portion 233 (top surface 233a) radially inward about swivel center axis 110.

Pallet conveyance device 200 further includes a pair of linear guide mechanisms 410. Base 211 is supported by support base 220 via the pair of linear guide mechanisms 410. The pair of linear guide mechanisms 410 are spaced apart from each other in the X-axis direction. Conveyance body 210 (base 211) is guided by the pair of linear guide mechanisms 410 to be movable in the Z-axis direction relative to support base 220.

Each linear guide mechanism 410 includes a rail 411 and a slider 412. Rail 411 extends in the Z-axis direction. Rail 411 is attached to support base 220. Slider 412 engages with rail 411 via a plurality of balls capable of infinite circulation. Slider 412 is slidable along rail 411. Slider 412 is attached to base 211. Slider 412 is attached to base body 231 (the bottom surface of bottom portion 232).

Swivel body 212 is disposed directly above base 211. Swivel body 212 includes a top plate 271, an outer cylinder 272, and an inner cylinder 261.

Top plate 271 has a plate shape in which the Y-axis direction corresponds to the thickness direction and which extends parallel to the horizontal plane (X-axis-Z-axis plane). When pallet conveyance device 200 is viewed from above, top plate 271 has a circular shape about swivel center axis 110. An oil pan 276 is attached to top plate 271. Oil pan 276 forms a receiving pan shape around top plate 271.

Outer cylinder 272 is attached to the bottom surface of top plate 271. Outer cylinder 272 includes a cylindrical portion 273 and an extending portion 274.

Cylindrical portion 273 extends cylindrically from top plate 271 along swivel center axis 110. Cylindrical portion 273 extends from top plate 271 toward base 211. The lower end of cylindrical portion 273 is disposed inside rising portion 233 of base body 231. Extending portion 274 extends from the lower end of cylindrical portion 273 radially outward about swivel center axis 110. Extending portion 274 extends from the lower end of cylindrical portion 273 toward rising portion 233. Extending portion 274 faces split plate 236 in the Y-axis direction.

Inner cylinder 261 is disposed inside outer cylinder 272. Inner cylinder 261 includes a bottom portion 262 and a cylindrical portion 263.

Bottom portion 262 has a plate shape in which the Y-axis direction corresponds to the thickness direction and which extends parallel to the horizontal plane (X-axis-Z-axis plane). Bottom portion 262 is disposed inside rising portion 233. A through-hole 264 is provided in bottom portion 262. Through-hole 264 extends along swivel center axis 110 and passes through bottom portion 262. Cylindrical portion 263 extends cylindrically from the peripheral portion of bottom portion 262 along swivel center axis 110. Cylindrical portion 263 extends from the peripheral portion of bottom portion 262 toward top plate 271.

Pallet conveyance device 200 further includes a plurality of linear guide mechanisms 266. The configuration of linear guide mechanisms 266 is the same as that of linear guide mechanisms 410. Outer cylinder 272 is connected to inner cylinder 261 via the plurality of linear guide mechanisms 266. The rails of linear guide mechanisms 266 are attached to inner cylinder 261 (cylindrical portion 263) (see Fig. 6). The rails of linear guide mechanisms 266 extend in the Y-axis direction. The sliders of linear guide mechanisms 266 are attached to outer cylinder 272 (cylindrical portion 273). Outer cylinder 272 is guided by the plurality of linear guide mechanisms 266 to be slidable (movable upward and downward) in the Y-axis direction relative to inner cylinder 261.

Pallet conveyance device 200 further includes a first piston cylinder 281 and a second piston cylinder 286. First piston cylinder 281 and second piston cylinder 286 are attached to swivel body 212. First piston cylinder 281 and second piston cylinder 286 move in the circumferential direction about swivel center axis 110 in conjunction with the swivel of swivel body 212.

First piston cylinder 281 and second piston cylinder 286 are actuators capable of outputting a stroke in the Y-axis direction. First piston cylinder 281 and second piston cylinder 286, together with the plurality of linear guide mechanisms 266 described above, constitute a lifting mechanism for causing fork 213 to move upward and downward.

First piston cylinder 281 is disposed radially outward about swivel center axis 110 relative to outer cylinder 272 (cylindrical portion 273). First piston cylinder 281 includes a first cylinder body 282 and a first piston 283. First cylinder body 282 is attached to top plate 271. First piston 283 is supported by first cylinder body 282 to be slidable in the Y-axis direction. First piston 283 extends downward from first cylinder body 282 and is in abutment with split plate 236 at a tip thereof. First cylinder body 282 is provided with a fluid chamber to which a fluid, such as hydraulic fluid, for causing first piston 283 to stroke in the Y-axis direction is supplied.

Second piston cylinder 286 is disposed radially inward about swivel center axis 110 relative to inner cylinder 261 (cylindrical portion 263). Second piston cylinder 286 includes a second cylinder body 287 and a second piston 288. Second cylinder body 287 is attached to bottom portion 262 of inner cylinder 261. Second piston 288 is supported by second cylinder body 287 to be slidable in the Y-axis direction. Second piston 288 extends upward from second cylinder body 287 and is in abutment with top plate 271 at a tip thereof. Second cylinder body 287 is provided with a fluid chamber to which a fluid, such as hydraulic fluid, for causing second piston 288 to stroke in the Y-axis direction is supplied.

As shown in Figs. 8 and 9, second piston cylinder 286 is provided radially about swivel center axis 110 between swivel center axis 110 and first piston cylinder 281. When pallet conveyance device 200 is viewed from above, the center of second piston 288 and the center of first piston 283 are located on a virtual straight line which intersects swivel center axis 110 and extends in the sliding direction of fork 213.

The distance between swivel center axis 110 and first piston cylinder 281 in the radial direction about swivel center axis 110 is longer than the distance between swivel center axis 110 and second piston cylinder 286 in the radial direction about swivel center axis 110.

The distance between first piston cylinder 281 and second piston cylinder 286 in the radial direction about swivel center axis 110 is longer than the distance between swivel center axis 110 and second piston cylinder 286 in the radial direction about swivel center axis 110. The distance between first piston cylinder 281 and second piston cylinder 286 in the radial direction about swivel center axis 110 may be equal to or less than the distance between swivel center axis 110 and second piston cylinder 286 in the radial direction about swivel center axis 110.

The distance between swivel center axis 110 and extension portion 274 in the radial direction about swivel center axis 110 is longer than the distance between swivel center axis 110 and second piston 288 in the radial direction about swivel center axis 110 and shorter than the distance between swivel center axis 110 and first piston 283 in the radial direction about swivel center axis 110.

First piston cylinder 281 (first piston 283) and second piston cylinder 286 (second piston 288) are provided in the sliding direction (in the figure, the X-axis direction) of fork 213, at positions opposite extending portion 274, with swivel center axis 110 in between. When pallet conveyance device 200 is viewed from above, first piston cylinder 281 (first piston 283), second piston cylinder 286 (second piston 288), and extension portion 274 are disposed on a virtual straight line that intersects swivel center axis 110 and extends in the sliding direction of fork 213.

As shown in Fig. 9, first piston cylinder 281 (first piston 283) and second piston cylinder 286 (second piston 288) are provided in the radial direction about swivel center axis 110, between swivel center axis 110 and support portion 317 positioned at second position Pb. Extension portion 274 is provided in the radial direction about swivel center axis 110, on the side opposite support portion 317 positioned at second position Pb, with swivel center axis 110 in between.

As the supply of hydraulic fluid or the like to first cylinder body 282 and second cylinder body 287 is synchronously controlled, first piston 283 and second piston 288 are caused to simultaneously perform an extension stroke. Outer cylinder 272 moves upward relative to inner cylinder 261 while being guided by the plurality of linear guide mechanisms 266. As a result, fork 213 mounted on swivel body 212 moves upward such that support portion 317 moves from third position Pc toward fourth position Pd.

As the supply of hydraulic fluid or the like to first cylinder body 282 and second cylinder body 287 is synchronously controlled, first piston 283 and second piston 288 are caused to simultaneously perform a retraction stroke. Outer cylinder 272 moves downward relative to inner cylinder 261 while being guided by the plurality of linear guide mechanisms 266. As a result, fork 213 mounted on swivel body 212 moves downward such that support portion 317 moves from fourth position Pd toward third position Pc.

As shown in Figs. 8 to 11, pallet conveyance device 200 further includes a servomotor 431, a reducer 432, a pinion 433, and a gear-integrated bearing 241. Servomotor 431, reducer 432, pinion 433, and gear-integrated bearing 241 constitute a swivel mechanism 430 for causing swivel body 212 to swivel about swivel center axis 110.

Gear-integrated bearing 241 is disposed in the Y-axis direction between bottom portion 262 of inner cylinder 261 and bottom portion 232 of base body 231. Gear-integrated bearing 241 supports swivel body 212 such that swivel body 212 is swivelable about swivel center axis 110 relative to base 211, and also transmits rotation from servomotor 431 to swivel body 212.

Gear-integrated bearing 241 includes a bearing portion 242 and a gear portion 243. Bearing portion 242 has a ring shape about swivel center axis 110. Gear portion 243 is formed of gear tooth surfaces formed on the outer peripheral surface of the outer ring of bearing portion 242. The outside diameter of gear portion 243 is smaller than the inside diameter of the plurality of split plates 236 that form the ring shape. The inner ring of bearing portion 242 is attached to base body 231 (bottom portion 232). The outer ring of bearing portion 242 is attached to inner cylinder 261 (bottom portion 262). Bearing portion 242 is configured to allow gear portion 243 to rotate relative to base body 231.

Servomotor 431, reducer 432, and pinion 433 are attached to base 211 (base body 231). Servomotor 431 is capable of selectively outputting, via an output shaft thereof, rotation in the forward direction and rotation in the reverse direction about swivel center axis 121. Swivel center axis 121 extends in the Z-axis direction. Reducer 432 is provided on the power transmission path from servomotor 431 to pinion 433. Reducer 432 converts the rotation about swivel center axis 121 into rotation about rotation center axis 122 by 90° while reducing the rotational speed from servomotor 431, and transmits the rotation to pinion 433. Pinion 433 is rotatable about rotation center axis 122. Rotation center axis 122 extends in the Y-axis direction. Pinion 433 meshes with gear portion 243.

As shown in Fig. 10, servomotor 431 includes an encoder 436. Encoder 436 converts the rotational angle of servomotor 431 into an electrical signal and outputs the electrical signal to servo driver 437 as a feedback signal.

Servo driver 437 controls the power supply to servomotor 431 such that servomotor 431 rotates in accordance with a command including a target position from a controller. More specifically, servo driver 437 sequentially calculates the actual rotational position of servomotor 431 based on the output from encoder 436, and controls the power supply to servomotor 431 based on the calculated result.

Pinion 433 receives the rotation from servomotor 431 to rotate in the forward or reverse direction about rotation center axis 122. As gear portion 243 meshes with pinion 433, which rotates about rotation center axis 122, a rotational force about swivel center axis 110 is provided to inner cylinder 261 (swivel body 212).

Swivel body 212 swivels in the forward or reverse direction about swivel center axis 110. Swivel body 212 is capable of swiveling within the angular range of 0° or more and 360° or less, based on a predetermined angular position in the circumferential direction about swivel center axis 110. In other words, swivel body 212 does not swivel beyond an angle of 360° in any one direction of the circumferential direction about swivel center axis 110. Swivel body 212 swivels in the forward or reverse direction within the angular range of 0° or more and 360° or less to be positioned at a predetermined angular position.

Fig. 1 shows an example of the angular positions (0° to 360°) at which swivel body 212 is positioned. When pallet P is conveyed to pallet placement stand 22 of machine tool 21, swivel body 212 is positioned at an angular position of 0° (360°). When pallet P is conveyed to pallet placement stands 27C, 27D, 27E of pallet stocker 26, swivel body 212 is positioned at an angular position of 90°. When pallet P is conveyed to pallet placement stand 32 of setup station 31, swivel body 212 is positioned at an angular position of 180°. When pallet P is conveyed to pallet placement stands 27A, 27B of pallet stocker 26, swivel body 212 is positioned at an angular position of 270°.

When a stepper motor is used as the drive source in swivel mechanism 430, accurate positioning of swivel body 212 requires the provision of a stopper with which swivel body 212 comes into abutment, or the provision of an actuator for inserting a pin into swivel body 212.

In contrast, in the present embodiment, the use of servomotor 431 as the drive source in swivel mechanism 430 enables swivel body 212 to be accurately positioned at any angular position about swivel center axis 110. This eliminates the need for providing various mechanisms such as the stopper or actuator described above, the configuration of pallet conveyance device 200 can be simplified.

As shown in Figs. 8, 9, and 11, pallet conveyance device 200 further includes a cylindrical body 291 and a cable duct 292. Cylindrical body 291 has a cylindrical shape about swivel center axis 110. Cylindrical body 291 is attached to base 211. Cylindrical body 291 rises from bottom portion 232 of base body 231 and extends through through-hole 264 into the interior space of inner cylinder 261.

Cable duct 292 is formed of a flexible duct body. Cable duct 292 is wound around the outer peripheral surface of cylindrical body 291. One end of cable duct 292 is fixed to cylindrical body 291. The other end of cable duct 292 is fixed to swivel body 212. Cable duct 292 accommodates various wires, pipes, and the like extending between base 211 on the fixed side and swivel body 212 on the movable side.

As swivel body 212 swivels, the other end of cable duct 292, which is fixed to swivel body 212, moves in the circumferential direction about swivel center axis 110. At this time, cable duct 292 deforms while changing the length of cable duct 292 wrapped around cylindrical body 291.

As shown in Fig. 14, pallet conveyance device 200 further includes a servomotor 451, a reducer 452, a pinion 422, and a rack 421. Servomotor 451, reducer 452, pinion 422, and rack 421 constitute a linear feed mechanism for causing conveyance body 210 to move in the Z-axis direction.

Rack 421 is attached to support base 220. Rack 421 extends in the Z-axis direction.

Servomotor 451, reducer 452, and pinion 422 are attached to base 211 (base body 231). Servomotor 451 is capable of selectively outputting, via an output shaft thereof, rotation in the forward direction and rotation in the reverse direction about a rotation center axis 131. Rotation center axis 131 extends in the X-axis direction. Reducer 452 is provided on the power transmission path from servomotor 451 to pinion 422. Reducer 452 converts the rotation about rotation center axis 131 into rotation about rotation center axis 132 by 90° while reducing the rotation speed from servomotor 451, and transmits the rotation to pinion 422. Pinion 422 is rotatable about rotation center axis 132. Rotation center axis 132 extends in the Y-axis direction. Pinion 422 meshes with rack 421.

Pinion 422 receives the rotation from servomotor 451 to rotate in the forward or reverse direction about rotation center axis 132. As rack 421 meshes with pinion 422 rotating about rotation center axis 132, a driving force in the Z-axis direction is provided to base 211. Conveyance body 210 moves in one direction or the other direction along the Z-axis direction while being guided by linear guide mechanism 410 described above.

As shown in Figs. 4 to 7, fork 213 further includes a first movable portion 311, a pair of linear guide mechanisms 321, a second movable portion 312, and a pair of linear guide mechanisms 322.

First movable portion 311 is connected to swivel body 212 (top plate 271) via the pair of linear guide mechanisms 321. The configuration of linear guide mechanisms 321 is the same as that of linear guide mechanisms 410. The pair of linear guide mechanisms 321 are spaced apart from each other in a direction (in the figure, the Z-axis direction) perpendicular to the sliding direction of fork 213. First movable portion 311 is guided by the pair of linear guide mechanisms 321 to be movable in one direction (in the figure, the X-axis direction) along the horizontal direction relative to swivel body 212.

Second movable portion 312 is connected to first movable portion 311 via the pair of linear guide mechanisms 322. The configuration of linear guide mechanisms 322 is the same as that of linear guide mechanisms 410. The pair of linear guide mechanisms 322 are spaced apart from each other in a direction (in the figure, the Z-axis direction) perpendicular to the sliding direction of fork 213. Second movable portion 312 is guided by the pair of linear guide mechanisms 322 to be movable in one direction (in the figure, the X-axis direction) along the horizontal direction relative to first movable portion 311.

First movable portion 311 and second movable portion 312 are connected to each other via a speed-doubling mechanism (not shown). First movable portion 311 and second movable portion 312 move in conjunction with each other in one direction (in the figure, the X-axis direction) along the horizontal direction via the speed-doubling mechanism.

Second movable portion 312 includes a pair of support portions 317. The pair of support portions 317 are spaced apart from each other in a direction (in the figure, the Z-axis direction) perpendicular to the sliding direction of fork 213. Each support portion 317 extends in a rib shape along the sliding direction (in the figure, the X-axis direction) of fork 213. As both edges of pallet P in the Z-axis direction are placed on the pair of support portions 317, respectively, pallet P is supported by the pair of support portions 317.

Note that the structure for supporting pallet P by fork 213 is not particularly limited. For example, fork 213 may be configured to support the central portion of pallet P in the Z-axis direction or may have a configuration with a grip provided on pallet P and an actuator, provided on fork 213, for gripping the grip.

When the pair of support portions 317 are positioned at first position Pa, in a top view of pallet conveyance device 200, the pair of support portions 317 (pallet P supported by the pair of support portions 317) overlaps swivel body 212 (top plate 271), base 211, and support base 220. The center of pallet P supported by the pair of support portions 317 intersects swivel center axis 110.

When the pair of support portions 317 are positioned at second position Pb, in a top view of pallet conveyance device 200, the pair of support portions 317 (pallet P supported by the pair of support portions 317) do not overlap swivel body 212 (top plate 271), base 211, and support base 220.

As shown in Figs. 5 and 9, when support portion 317 is positioned at second position Pb and fourth position Pd, the weights of pallet P, the workpiece, and the like act on support portion 317, causing fork 213 to deform such that support portion 317 sinks downward. In this case, the orientation of pallet P supported by support portion 317 becomes unstable, potentially preventing the smooth transfer of pallet P to various pieces of equipment. A configuration for suppressing such deformation of fork 213 will be described below.

As shown in Figs. 8, 9, and 11 to 13, base 211 includes a first locking portion 201. First locking portion 201 has a ring shape about swivel center axis 110. First locking portion 201 is formed of the plurality of split plates 236.

Swivel body 212 includes a second locking portion 202. Second locking portion 202 faces first locking portion 201 from below. Second locking portion 202 is formed of extending portion 274 of outer cylinder 272.

Base 211 includes an abutment portion 203. First piston 283 of first piston cylinder 281 is in abutment with abutment portion 203 from above. Abutment portion 203 is formed of the plurality of split plates 236.

During swivel of swivel body 212 about swivel center axis 110, in a top view of pallet conveyance device 200, second locking portion 202 (projection 274) moves in the circumferential direction about swivel center axis 110 while overlapping first locking portion 201 (the plurality of split plates 236). During swivel of swivel body 212 about swivel center axis 110, in a top view of pallet conveyance device 200, first piston 283 moves in the circumferential direction about swivel center axis 110 while overlapping abutment portion 203 (the plurality of split plates 236).

As shown in Figs. 8 and 12, when support portion 317 is positioned at third position Pc, second locking portion 202 (projection 274) is spaced downward from first locking portion 201 (the plurality of split plates 236).

As shown in Figs. 9 and 13, when support portion 317 is positioned at second position Pb and fourth position Pd, second locking portion 202 (projection 274) is lockable to first locking portion 201 (the plurality of split plates 236) in the up-down direction, at a position opposite support portion 317 with swivel center axis 110 in between in the sliding direction (in the figure, the X-axis direction) of fork 213.

In this configuration, as the weights of pallet P, the workpiece, and the like act on support portion 317, when fork 213 begins to deform such that support portion 317 sinks downward, second locking portion 202 (projection 274) begins to be displaced upward at a position opposite support portion 317 with swivel center axis 110 in between in the sliding direction of fork 213. At this time, second locking portion 202 (projection 274) can be locked to first locking portion 201 (the plurality of split plates 236) in the up-down direction, thereby suppressing the deformation of fork 213. More specifically, as second locking portion 202 (projection 274) comes into abutment with first locking portion 201 (the plurality of split plates 236) from below, the upward displacement of second locking portion 202 (projection 274) is restricted, and as a result, downward sinking of support portion 317 is restricted.

First piston 283 is in abutment with abutment portion 203 (the plurality of split plates 236) from above at a position between support portion 317 and swivel center axis 110 in the sliding direction (in the figure, the X-axis direction) of fork 213. When support portion 317 located at the tip of fork 213 begins to sink downward, first piston 283 functions like a strut.

Furthermore, when support portion 317 is positioned at second position Pb and fourth position Pd, and support portion 317 does not support pallet P, a gap is provided between first locking portion 201 (the plurality of split plates 236) and second locking portion 202 (extending portion 274) in the up-down direction.

The size of the gap is smaller than the stroke of first piston 283 and second piston 288 in the Y-axis direction. The size of the gap may be, for example, 2 mm or less, 1 mm or less, or 0.5 mm or less.

To summarize the configuration of pallet conveyance device 200 in Embodiment 1 of the present invention described above, pallet conveyance device 200 in the present embodiment includes: base 211 including first locking portion 201; swivel body 212 including second locking portion 202 that faces first locking portion 201 from below, swivel body 212 being mounted on base 211 and swiveling about swivel center axis 110 parallel to the up-down direction; and fork 213 including support portion 317 that is configured to support pallet P, fork 213 being mounted on swivel body 212, fork 213 sliding such that support portion 317 moves between first position Pa directly above swivel body 212 and second position Pb offset from directly above swivel body 212 and moving upward and downward such that support portion 317 moves between third position Pc and fourth position Pd located above third position Pc. When support portion 317 is positioned at second position Pb and fourth position Pd, second locking portion 202 is lockable to first locking portion 201 in the up-down direction at a position opposite support portion 317 with swivel center axis 110 in between in a sliding direction of fork 213.

With this configuration, second locking portion 202 can be locked to first locking portion 201 in the up-down direction, thus preventing fork 213 from deforming such that support portion 317 sinks downward. Consequently, the orientation of pallet P supported by support portion 317 becomes stable, enabling smooth transfer of pallet P to various pieces of equipment.

Pallet conveyance device 200 further includes first piston cylinder 281 attached to swivel body 212 for causing fork 213 to move upward and downward. Base 211 further includes abutment portion 203. First piston cylinder 281 includes first piston 283 that comes into abutment with abutment portion 203 from above at a position between support portion 317 and swivel center axis 110 in a sliding direction of fork 213 when support portion 317 is positioned at second position Pb and fourth position Pd.

With this configuration, first piston 283 can function like a strut, thereby more effectively suppressing the deformation of fork 213 described above.

Furthermore, base 211 includes the plurality of split plates 236 arranged in a circumferential direction about swivel center axis 110 to form a ring shape, each split plate extending in an arc. First locking portion 201 and abutment portion 203 are formed of the plurality of split plates 236.

This configuration leads to a configuration in which, regardless of the angular position at which swivel body 212 is positioned, first locking portion 201 and second locking portion 202 face each other in the up-down direction, and first piston 283 comes into abutment with abutment portion 203. Furthermore, the plurality of split plates 236 can be shared as first locking portion 201 and abutment portion 203, leading to a simplified configuration of pallet conveyance device 200.

Pallet conveyance device 200 further includes second piston cylinder 286 attached to base 211 for causing fork 213 to move upward and downward. Second piston cylinder 286 includes second piston 288 that comes into abutment with swivel body 212 from below. When support portion 317 is positioned at second position Pb and fourth position Pd and when support portion 317 does not support pallet P, a gap is provided between first locking portion 201 and second locking portion 202 in the up-down direction.

With this configuration, even when pallet P is not mounted, an excessive upward force acting on swivel body 212 from second piston cylinder 286 can be prevented from acting on first locking portion 201 via second locking portion 202.

Furthermore, pallet conveyance device 200 in the present embodiment includes: swivel body 212; swivel mechanism 430 including servomotor 431 and transmitting rotation output from servomotor 431 to swivel body 212 to cause swivel body 212 to swivel about swivel center axis 110 parallel to the up-down direction; and fork 213 including support portion 317 that is configured to support pallet P, fork 213 being mounted on swivel body 212, fork 213 sliding such that support portion 317 moves between first position Pa directly above swivel body 212 and second position Pb offset from directly above swivel body 212.

With this configuration, the use of servomotor 431 as the drive source in swivel mechanism 430 can accurately position swivel body 212 at any angular position about swivel center axis 110. This can eliminate restrictions on the angular positions at which swivel body 212 is positioned, thereby increasing the flexibility in layout of various pieces of equipment to which pallet P is conveyed.

Furthermore, pallet conveyance device 200 includes: base 211 including first locking portion 201; fork 213 including support portion 317 capable of supporting pallet P, fork 213 being mounted on swivel body 212, fork 213 sliding such that support portion 317 moves between first position Pa directly above base 211 and second position Pb offset from directly above base 211 and moving upward and downward such that support portion 317 moves between third position Pc and fourth position Pd located above third position Pc; and second locking portion 202 that moves integrally with fork 213 while facing first locking portion 201 from below. When support portion 317 is positioned at second position Pb and fourth position Pd, second locking portion 202 is lockable to first locking portion 201 in the up-down direction at a position opposite second position Pb with first position Pa in between in the sliding direction of fork 213.

Furthermore, pallet conveyance device 200 includes: base 211; swivel body 212 mounted on base 211; swivel mechanism 430 including servomotor 431 and transmitting rotation output from servomotor 431 to swivel body 212 to cause swivel body 212 to swivel about swivel center axis 110 parallel to the up-down direction; and fork 213 including support portion 317 capable of supporting a pallet, fork 213 being mounted on swivel body 212, fork 213 sliding such that support portion 317 moves between first position Pa directly above swivel body 212 and second position Pb offset from directly above swivel body 212 and moving upward and downward such that support portion 317 moves between third position Pc and fourth position Pd located above third position Pc. When the weight of the pallet acts on support portion 317 to cause fork 213 to deform such that support portion 317 sinks downward, swivel body 212 is lockable to base 211 in the up-down direction at a position opposite support portion 317 with swivel center axis 110 in between in the sliding direction of fork 213.

### (Embodiment 2)

The present embodiment will describe the layout of various pieces of equipment in pallet handling system 100. Description of the configurations of Embodiment 2 that overlap with those of Embodiment 1 will not be repeated below.

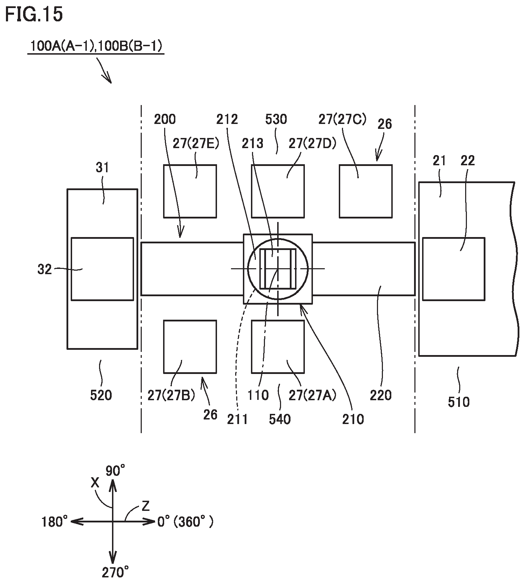

Fig. 15 is a top view schematically showing the layout of various pieces of equipment in the pallet handling system. A pallet handling system 100A (A-1), 100B (B-1) shown in Fig. 15 corresponds to the embodiment of the layout of various pieces of equipment in pallet handling system 100 of Fig. 1.

Referring to Fig. 15, when pallet handling system 100 is viewed from above, a first region 510, a second region 520, a third region 530, and a fourth region 540 are defined. First region 510, second region 520, third region 530, and fourth region 540 surround support base 220 of pallet conveyance device 200.

First region 510 and second region 520 are located on both sides of support base 220 in the Z-axis direction. Support base 220 is provided between first region 510 and second region 520 in the Z-axis direction. Third region 530 and fourth region 540 are provided on both sides of support base 220 in the X-axis direction. Support base 220 is provided between third region 530 and fourth region 540 in the X-axis direction.

The boundary between first region 510 and third region 530, fourth region 540 corresponds to a straight line extending in the X-axis direction through one end of support base 220 in the Z-axis direction. The boundary between third region 530, fourth region 540 and second region 520 corresponds to a straight line extending in the X-axis direction through the other end of support base 220 in the Z-axis direction.

Machine tool 21 is provided in first region 510. When pallet handling system 100 is viewed from above, pallet placement stand 22 faces support base 220 in the Z-axis direction. In this configuration, conveyance body 210 is capable of conveying pallet P to first region 510. Conveyance body 210 can position swivel body 212 at an angular position of 0° (360°) and slide fork 213 in the Z-axis direction, thereby conveying pallet P to pallet placement stand 22.

Setup station 31 is provided in second region 520. When pallet handling system 100 is viewed from above, pallet placement stand 32 faces support base 220 in the Z-axis direction. In this configuration, conveyance body 210 is capable of conveying pallet P to second region 520. Conveyance body 210 can position swivel body 212 at an angular position of 180° and slide fork 213 in the Z-axis direction, thereby conveying pallet P to pallet placement stand 32.

Pallet placement stand 27C, pallet placement stand 27D, and pallet placement stand 27E of pallet stocker 26 are provided in third region 530. When pallet handling system 100 is viewed from above, each pallet placement stand 27 of pallet placement stands 27C, 27D, and 27E faces support base 220 in the X-axis direction. In this configuration, conveyance body 210 is capable of conveying pallet P to third region 530. Conveyance body 210 can position swivel body 212 at an angular position of 90° and slide fork 213 in the X-axis direction, thereby conveying pallet P to each pallet placement stand 27 of pallet placement stands 27C, 27D, and 27E.

Pallet placement stands 27A and 27B of pallet stocker 26 are provided in fourth region 540. When pallet handling system 100 is viewed from above, each pallet placement stand 27 of pallet placement stands 27A and 27B faces support base 220 in the X-axis direction. In this configuration, conveyance body 210 is capable of conveying pallet P to fourth region 540. Conveyance body 210 can position swivel body 212 at an angular position of 270° and slide fork 213 in the X-axis direction, thereby conveying pallet P to each pallet placement stand 27 of pallet placement stands 27A and 27B.

To summarize the configuration of pallet handling system 100A (A-1) described above, pallet handling system 100A (A-1) includes support base 220 extending in the Z-axis direction, which is a first direction, and conveyance body 210 supported by support base 220 to be movable in the Z-axis direction and conveying pallet P. In a top view of pallet handling system 100, first region 510 and second region 520 are respectively defined on both sides of support base 220 in the Z-axis direction, and third region 530 and fourth region 540 are respectively defined on both sides of support base 220 in the X-axis direction, which is a second direction, perpendicular to the Z-axis direction. Pallet handling system 100A (A-1) further includes machine tool 21 which is provided in first region 510 and to which pallet P is conveyed by conveyance body 210, and setup station 31 which is provided in second region 520 and to which pallet P is conveyed by conveyance body 210. Conveyance body 210 is further capable of conveying pallet P to third region 530 and fourth region 540, which are at least any one of third region 530 and fourth region 540.

Furthermore, to summarize the configuration of pallet handling system 100B (B-1), pallet handling system 100B (B-1) includes support base 220 and conveyance body 210 described above. In a top view of pallet handling system 100, first region 510, second region 520, third region 530, and fourth region 540 described above are defined. Conveyance body 210 is capable of conveying pallet P to first region 510, second region 520, third region 530, and fourth region 540.

With this configuration, the region around support base 220 that supports conveyance body 210 can be effectively utilized to install various pieces of equipment to which pallet P is conveyed by conveyance body 210. This can expand the scope of automation achieved by pallet handling system 100.

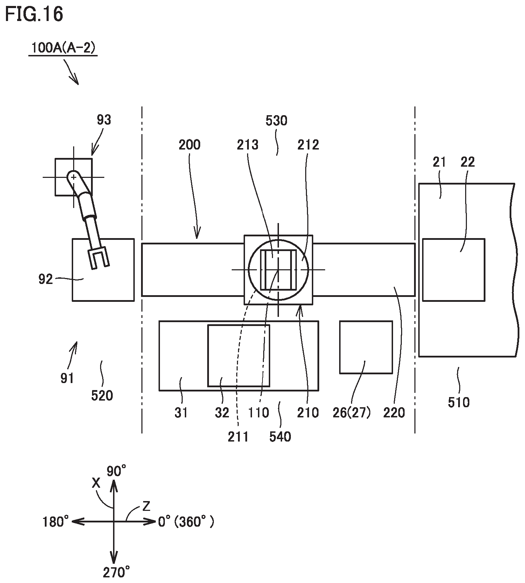

Fig. 16 is a top view schematically showing another embodiment of the layout of various pieces of equipment in the pallet handling system. A pallet handling system 100A (A-2) shown in Fig. 16 corresponds to a modification of pallet handling system 100A (A-1) described above.

Referring to Fig. 16, machine tool 21 is provided in first region 510. No equipment is provided in third region 530.

A pallet transfer station 91 is provided in second region 520. Pallet transfer station 91 is equipment for temporarily placing pallet P that is fed into pallet handling system 100 or removed from pallet handling system 100.

Pallet transfer station 91 includes a pallet placement stand 92 and a robot 93. When pallet handling system 100 is viewed from above, pallet placement stand 92 faces support base 220 in the Z-axis direction. Robot 93 includes a hand capable of grasping pallet P and can convey pallet P to pallet placement stand 92. In this configuration, conveyance body 210 can position swivel body 212 at an angular position of 180° and slide fork 213 in the Z-axis direction, thereby conveying pallet P to pallet placement stand 92.

Pallet stocker 26 and setup station 31 are provided in fourth region 540. When pallet handling system 100 is viewed from above, each of pallet placement stand 27 of pallet stocker 26 and pallet placement stand 32 of setup station 31 faces support base 220 in the X-axis direction. In this configuration, conveyance body 210 can position swivel body 212 at an angular position of 270° and slide fork 213 in the X-axis direction, thereby conveying pallet P to each of pallet placement stands 27 and 32.

Furthermore, in pallet handling system 100A, a pallet stocker, a workpiece measurement station, or a pallet cleaning station may be provided in second region 520. The workpiece measurement station is equipment primarily for measuring a workpiece machined by a machine tool. The workpiece measurement station includes various measuring instruments, such as a three-dimensional shape measuring instrument, and a pallet placement stand. The pallet cleaning station is equipment primarily for cleaning a workpiece machined by the machine tool. The pallet cleaning station includes a cleaning device capable of spraying coolant or air onto the workpiece, and a pallet placement stand. The pallet placement stand may include a clamping mechanism for holding the pallet and a tilting mechanism for tilting the pallet placement stand.

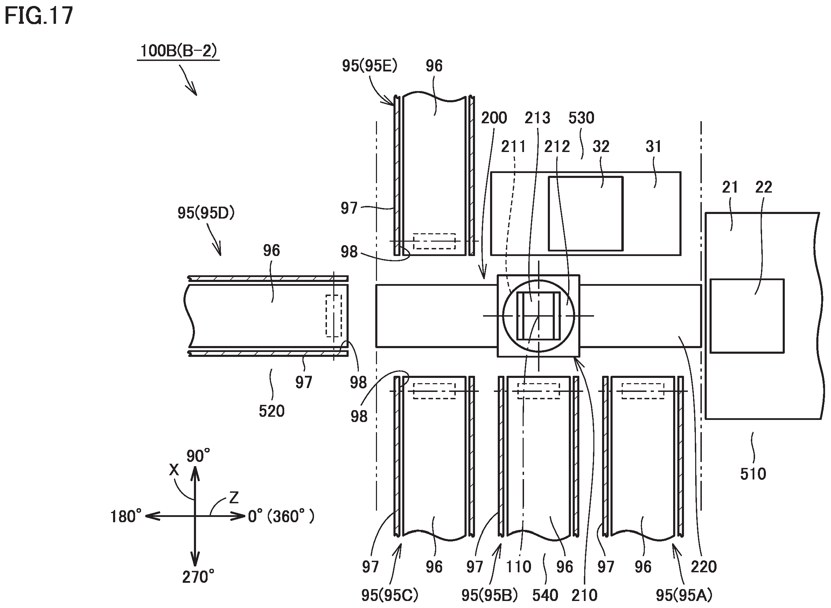

Fig. 17 is a top view schematically showing still another embodiment of the layout of various pieces of equipment in a pallet handling system. A pallet handling system 100B (B-2) shown in Fig. 17 corresponds to a modification of pallet handling system 100B (B-1) described with reference to Fig. 15.

Referring to Fig. 17, machine tool 21 is provided in first region 510. A conveyance device 95 (95D) is provided in second region 520. Conveyance device 95 is a device for conveying pallet P from pallet handling system 100. Conveyance device 95 includes a belt conveyor 96 and a cover body 97. Belt conveyor 96 includes a drive shaft, a driven shaft, and an endless belt that spans between the drive shaft and the driven shaft and circulates as the drive shaft rotates. Cover body 97 extends along belt conveyor 96 while covering the space around belt conveyor 96. Cover body 97 has an opening 98 that is open in one direction. Pallet P is placed on belt conveyor 96 through opening 98.

In conveyance device 95D, belt conveyor 96 extends in the Z-axis direction. When pallet handling system 100 is viewed from above, the opening surface of opening 98 of cover body 97 faces support base 220 in the Z-axis direction. In this configuration, conveyance body 210 can position swivel body 212 at an angular position of 180° and slide fork 213 in the Z-axis direction, thereby conveying pallet P to belt conveyor 96 of conveyance device 95D.

A conveyance device 95 (95E) and setup station 31 are provided in third region 530.

In conveyance device 95E, belt conveyor 96 extends in the X-axis direction. When pallet handling system 100 is viewed from above, the opening surface of opening 98 of cover body 97 faces support base 220 in the X-axis direction. When pallet handling system 100 is viewed from above, pallet placement stand 32 of setup station 31 faces support base 220 in the X-axis direction.

In this configuration, conveyance body 210 can position swivel body 212 at an angular position of 90° and slide fork 213 in the X-axis direction, thereby conveying pallet P to each of belt conveyor 96 of conveyance device 95E and pallet placement stand 32 of setup station 31.

A plurality of conveyance devices 95 (95A, 95B, 95C) are provided in fourth region 540. In each conveyance device 95 of conveyance devices 95A, 95B, and 95C, belt conveyor 96 extends in the X-axis direction. When pallet handling system 100 is viewed from above, the opening surface of opening 98 of cover body 97 faces support base 220 in the X-axis direction.

In this configuration, conveyance body 210 can position swivel body 212 at an angular position of 270° and slide fork 213 in the X-axis direction, thereby conveying pallet P to belt conveyor 96 of each conveyance device 95 of conveyance devices 95A, 95B, and 95C.

### (Embodiment 3)

The present embodiment will also describe the layout of various pieces of equipment in pallet handling system 100. Description of the configurations of Embodiment 3 that overlap with those of Embodiments 1 and 2 will not be repeated below.

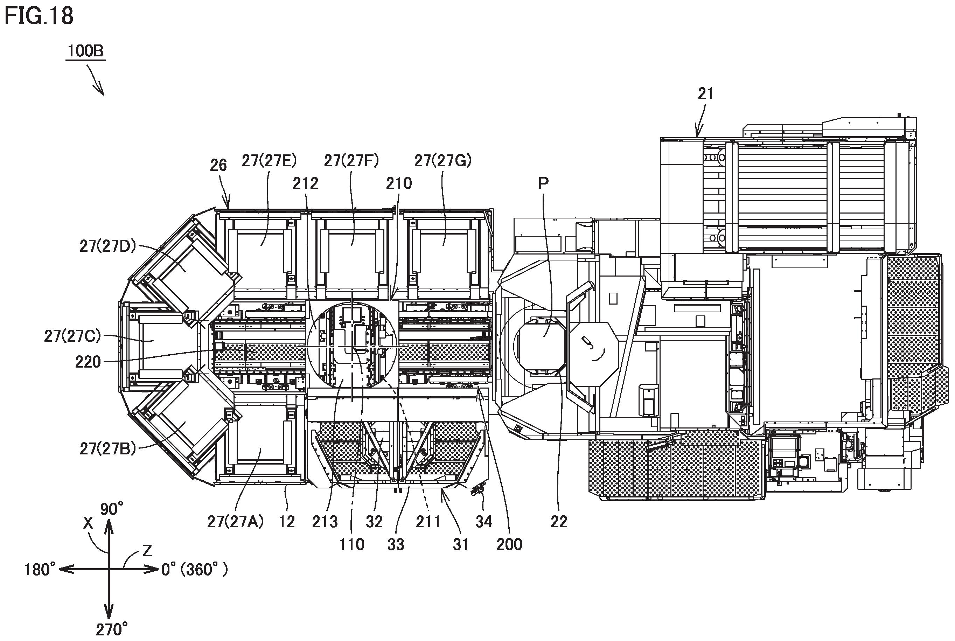

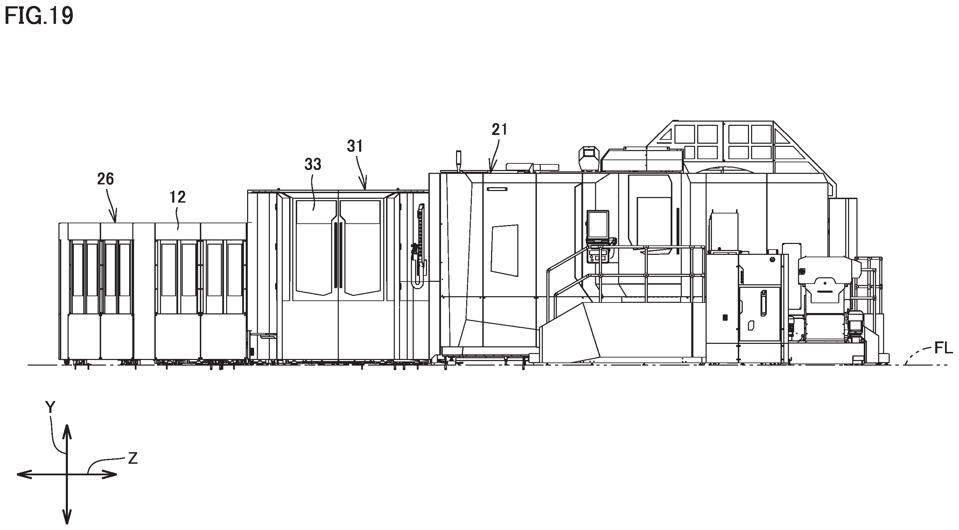

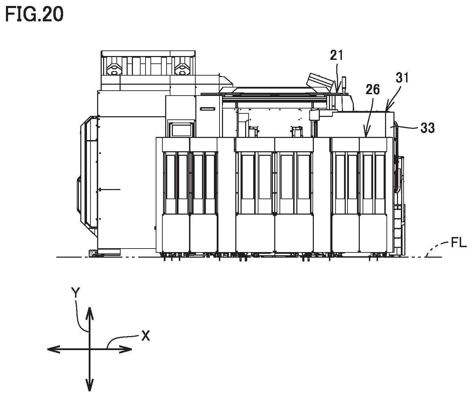

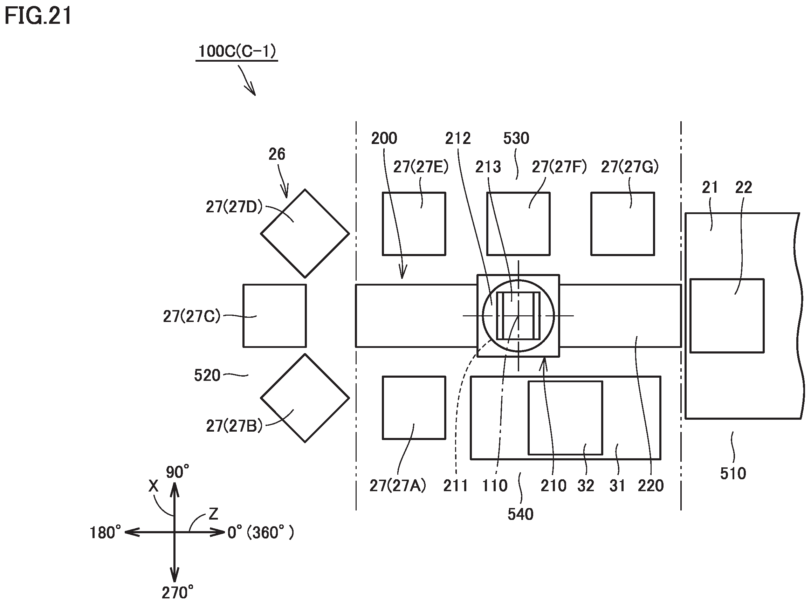

Fig. 18 is a top view of a pallet handling system in Embodiment 3 of the present invention. Figs. 19 and 20 are side views of the pallet handling system of Fig. 18. Fig. 21 is a top view schematically showing the layout of various pieces of equipment in the pallet handling system of Fig. 18.

Referring to Figs. 18 to 21, machine tool 21 is provided in first region 510. Pallet placement stands 27B, 27C, and 27D of pallet stocker 26 are provided in second region 520.

When pallet handling system 100 is viewed from above, pallet placement stand 27C faces support base 220 in the Z-axis direction. Pallet placement stand 27B faces support base 220 in a direction oblique to each of the Z-axis direction and the X-axis direction. Pallet placement stand 27D faces support base 220 in a direction oblique to each of the Z-axis direction and the X-axis direction. Pallet placement stands 27B, 27C, and 27D are arranged in an arc to surround an end of support base 220 in the Z-axis direction.

In this configuration, conveyance body 210 can position swivel body 212 at an angular position of 0° (360°) and slide fork 213 in the Z-axis direction, thereby conveying pallet P to pallet placement stand 22 of machine tool 21.

Conveyance body 210 can position swivel body 212 at an angular position of 180° and slide fork 213 in the Z-axis direction, thereby conveying pallet P to pallet placement stand 27C. Conveyance body 210 can position swivel body 212 at an angular position exceeding 180° and less than 270° (e.g., an angular position of 225°) and slide fork 213 in a direction oblique to each of the Z-axis direction and the X-axis direction, thereby conveying pallet P to pallet placement stand 27B. Conveyance body 210 can position swivel body 212 at an angular position exceeding 90° and less than 180° (e.g., an angular position of 135°) and slide fork 213 in a direction oblique to each of the Z-axis direction and the X-axis direction, thereby conveying pallet P to pallet placement stand 27D.

Pallet placement stands 27E, 27F, and 27G of pallet stocker 26 are provided in third region 530. When pallet handling system 100 is viewed from above, each pallet placement stand 27 of pallet placement stands 27E, 27F, and 27G faces support base 220 in the X-axis direction. In this configuration, conveyance body 210 can position swivel body 212 at an angular position of 90° and slide fork 213 in the X-axis direction, thereby conveying pallet P to each pallet placement stand 27 of pallet placement stands 27E, 27F, and 27G.

Pallet placement stand 27A of pallet stocker 26 and setup station 31 are provided in fourth region 540. When pallet handling system 100 is viewed from above, each of pallet placement stand 27A of pallet stocker 26 and pallet placement stand 32 of setup station 31 faces support base 220 in the X-axis direction. In this configuration, conveyance body 210 can position swivel body 212 at an angular position of 270° and slide fork 213 in the X-axis direction, thereby conveying pallet P to each of pallet placement stand 27A and pallet placement stand 32.

To summarize the configuration of a pallet handling system 100C (C-1) in Embodiment 3 of the present invention described above, pallet handling system 100C in the present embodiment includes support base 220 and conveyance body 210 described in Embodiment 2. In a top view of pallet handling system 100, first region 510, second region 520, third region 530, and fourth region 540 are defined. Conveyance body 210 can slide pallet P to second region 520 that is at least one region of first region 510, second region 520, third region 530, and fourth region 540 in a direction oblique to each of the Z-axis direction, which is the first direction, and the X-axis direction, which is the second direction.

With this configuration, conveyance body 210 can slide pallet P in a direction oblique to each of the Z-axis direction and the X-axis direction, thus reducing restrictions on the layout of equipment to which pallet P is conveyed by conveyance body 210. Consequently, various pieces of equipment can be installed around support base 220, thereby expanding the scope of automation achieved by pallet handling system 100.

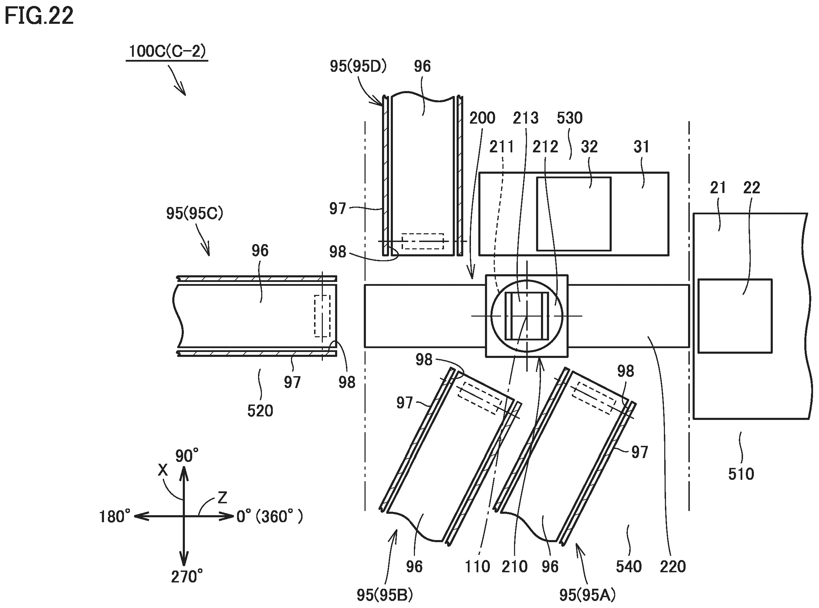

Fig. 22 is a top view schematically showing another embodiment of the layout of various pieces of equipment in the pallet handling system. A pallet handling system 100C (C-2) shown in Fig. 22 corresponds to a modification of pallet handling system 100C (C-1) described above.

Referring to Fig. 22, machine tool 21 is provided in first region 510. Conveyance device 95 (95C) is provided in second region 520. In conveyance device 95C, belt conveyor 96 extends in the Z-axis direction. When pallet handling system 100 is viewed from above, the opening surface of opening 98 of cover body 97 faces support base 220 in the Z-axis direction. In this configuration, conveyance body 210 can position swivel body 212 at an angular position of 180° and slide fork 213 in the Z-axis direction, thereby conveying pallet P to belt conveyor 96 of conveyance device 95C.

Conveyance device 95 (95D) and setup station 31 are provided in third region 530.

In conveyance device 95D, belt conveyor 96 extends in the X-axis direction. When pallet handling system 100 is viewed from above, the opening surface of opening 98 of cover body 97 faces support base 220 in the X-axis direction. When pallet handling system 100 is viewed from above, pallet placement stand 32 of setup station 31 faces support base 220 in the X-axis direction.

In this configuration, conveyance body 210 can position swivel body 212 at an angular position of 90° and slide fork 213 in the X-axis direction, thereby conveying pallet P to each of belt conveyor 96 of conveyance device 95E and pallet placement stand 32 of setup station 31.

The plurality of conveyance devices 95 (95A, 95B) are provided in fourth region 540. In each conveyance device 95 of conveyance devices 95A and 95B, belt conveyor 96 extends in a direction oblique to each of the Z-axis direction and the X-axis direction. When pallet handling system 100 is viewed from above, the opening surface of opening 98 of cover body 97 faces support base 220 in a direction oblique to each of the Z-axis direction and the X-axis direction.

In this configuration, conveyance body 210 can position swivel body 212 at an angular position exceeding 180° and less than 270° (e.g., an angular position of 240°) and slide fork 213 in a direction oblique to each of the Z-axis direction and the X-axis direction, thereby conveying pallet P to belt conveyor 96 of each conveyance device 95 of conveyance devices 95A and 95B.

Pallet handling system 100C (C-2) also corresponds to the modification of pallet handling system 100B described in Embodiment 2.

Although the embodiments of the present invention have been described, it should be understood that the embodiments disclosed herein have been presented for the purpose of illustration and non-restrictive in every respect. It is therefore intended that the scope of the present invention is defined by claims and encompasses all modifications and variations equivalent in meaning and scope to the claims.

## Claims

1. A pallet conveyance device comprising:
a base (211) including a first locking portion (201);
a swivel body (212) including a second locking portion (202) facing the first locking portion (201) from below, the swivel body (212) being mounted on the base (211) and swiveling about a swivel center axis (110) parallel to an up-down direction; and
a fork (213) including a support portion (317) that is configured to support a pallet, the fork (213) being mounted on the swivel body (212), the fork (213) sliding such that the support portion (317) moves between a first position (Pa) directly above the swivel body (212) and a second position (Pb) offset from directly above the swivel body (212) and moving upward and downward such that the support portion (317) moves between a third position (Pc) and a fourth position (Pd) located above the third position (Pc),
wherein when the support portion (317) is positioned at the second position (Pb) and the fourth position (Pd), the second locking portion (202) is lockable to the first locking portion (201) in the up-down direction at a position opposite the support portion (317) with the swivel center axis (110) in between in a sliding direction of the fork (213).

2. The pallet conveyance device according to claim 1, further comprising a first piston cylinder (281) attached to the swivel body (212) for causing the fork (213) to move upward and downward, wherein
the base (211) further includes an abutment portion (203), and
the first piston cylinder (281) includes a first piston (283) that comes into abutment with the abutment portion (203) from above at a position between the support portion (317) and the swivel center axis (110) in the sliding direction of the fork (213) when the support portion (317) is positioned at the second position (Pb) and the fourth position (Pd).

3. The pallet conveyance device according to claim 2, wherein
the base (211) includes a plurality of split plates (236) arranged in a circumferential direction about the swivel center axis (110) to form a ring shape, each split plate extending in an arc, and
the first locking portion (201) and the abutment portion (203) are formed of the plurality of split plates (236).

4. The pallet conveyance device according to any one of claims 1 to 3, further comprising a second piston cylinder (286) attached to the base (211) for causing the fork (213) to move upward and downward, wherein
the second piston cylinder (286) includes a second piston (288) that comes into abutment with the swivel body (212) from below, and
when the support portion (317) is positioned at the second position (Pb) and the fourth position (Pd) and when the support portion (317) does not support a pallet, a gap is provided between the first locking portion (201) and the second locking portion (202) in the up-down direction.

5. A pallet conveyance device comprising:
a swivel body (212);
a swivel mechanism (430) including a servomotor (431) and transmitting rotation output from the servomotor (431) to the swivel body (212) to cause the swivel body (212) to swivel about a swivel center axis (110) parallel to an up-down direction; and
a fork (213) including a support portion (317) that is configured to support a pallet, the fork (213) being mounted on the swivel body (212) and sliding such that the support portion (317) moves between a first position (Pa) directly above the swivel body (212) and a second position (Pb) offset from directly above the swivel body (212).
